# EUROPEAN PATENT APPLICATION

(11) **EP 1 335 562 A2**
(43) Date of publication of application: **13.08.2003**
(21) Application number: 03250679.2
(22) Date of filing: 03.02.2003
(51) Int. Cl.: H04L 29/06

(54) **Management system for vending machine**

(30) Priority: 12.02.2002 JP 2002033939
(71) Applicant: Sanden Corporation, Isesaki-shi, Gunma 372-8502 (JP)
(72) Inventor: Ohtsuki, Takahiro, c/o Sanden Corporation, Isesaki-shi, Gunma 372-8502 (JP)
(74) Representative: Haley, Stephen

(57) **Abstract**

Since a converter (5), which converts a local side communication protocol of a second communication apparatus (4) into a local side communication protocol of a first communication apparatus (3) and vice versa, is provided between the second communication apparatus (4) and a host computer (2), a network (400) using the second communication apparatus can be established without correcting the host computer (2).

## Description

The present invention relates to a management system for a vending machine that connects a host computer and the vending machine via a network and centrally manages various kinds of information concerning the vending machine on the host computer.

### Description of the Related Art

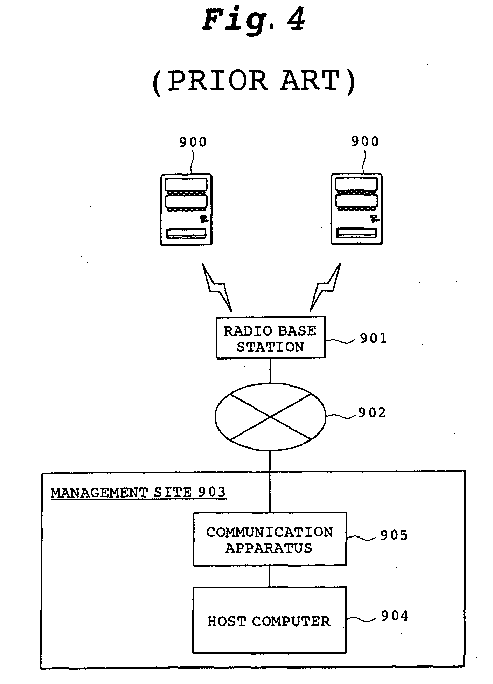

A conventional management system for a vending machine of this type will be described with reference to Fig. 4. Fig. 4 is a diagram of the conventional management system for a vending machine.

As shown in Fig. 4, in this management system, a vending machine 900 provided with a radio communication apparatus (not shown) is made accessible to a management site 903 via a radio base station 901 and a packet communication network 902. In the management site 903, a host computer 904 in which a management program for the vending machine 900 runs and a communication apparatus 905 for connecting the host computer 904 to the packet communication network 902 are installed. With such a configuration, each vending machine 900 installed in remote places can be managed and monitored in the host computer 904.

In this conventional management system, another vending machine, which is connected to a host computer via a different communication protocol and network from existing ones, may be added to an existing facility. That is, another communication infrastructure may be added to an existing infrastructure.

In this case, it is necessary to connect a communication apparatus, which has a different communication protocol from those of the communication apparatus installed in the conventional management site, to the host computer. Then, this new communication apparatus may have a local side communication protocol different from that of the existing communication apparatus. On the other hand, in order to connect the new communication apparatus to the host computer, it is necessary to correct a management program in order to accommodate the new communication protocol. Consequently, in order to add such a communication infrastructure, significant costs are required, for example, to correct the management program.

The present invention has been devised in view of the above and other drawbacks, and it is an object of the present invention to provide a management system for vending machine that can establish a management system provided with a plurality of communication infrastructures at low costs.

In order to attain this object, a management system for a vending machine in accordance with the present invention comprises: a host computer for centrally managing various kinds of information on the vending machine; a first communication apparatus for connecting the host computer to a first network; a second communication apparatus for connecting the host computer to a second network; and a protocol converter existing between the host computer and the second communication apparatus, wherein the second communication apparatus uses a protocol, which is different from a local side communication protocol of the first communication apparatus, in local side communication, and the protocol converter converts the local side communication protocol used in the first communication apparatus into the local side communication protocol used in the second communication apparatus and vice versa.

According to the present invention, the protocol converter converts the local side communication protocol of the second communication apparatus into the local side communication protocol of the first communication apparatus and vice versa. Thus, even if the first communication apparatus and the second communication apparatus use the local side communication protocols different from each other, the host computer can be connected to both the communication apparatuses by coping with the communication protocol of the first communication apparatus only. Therefore, a management system provided with a plurality of communication infrastructures can be established at low costs without correcting a management program of the host computer with respect to the conventional management system provided with the first communication apparatus only.

Other objects, configurations and effects of the present invention will be apparent in the following detailed description.

In the Drawings;
Fig. 1 is a diagram of a management system for a vending machine;
Fig. 2 is a sequence diagram of communication between a host computer and a vending machine via a packet communication network;
Fig. 3 is a sequence diagram of communication between a host computer and a vending machine via an LAN; and
Fig. 4 is a diagram of a conventional management system for a vending machine.

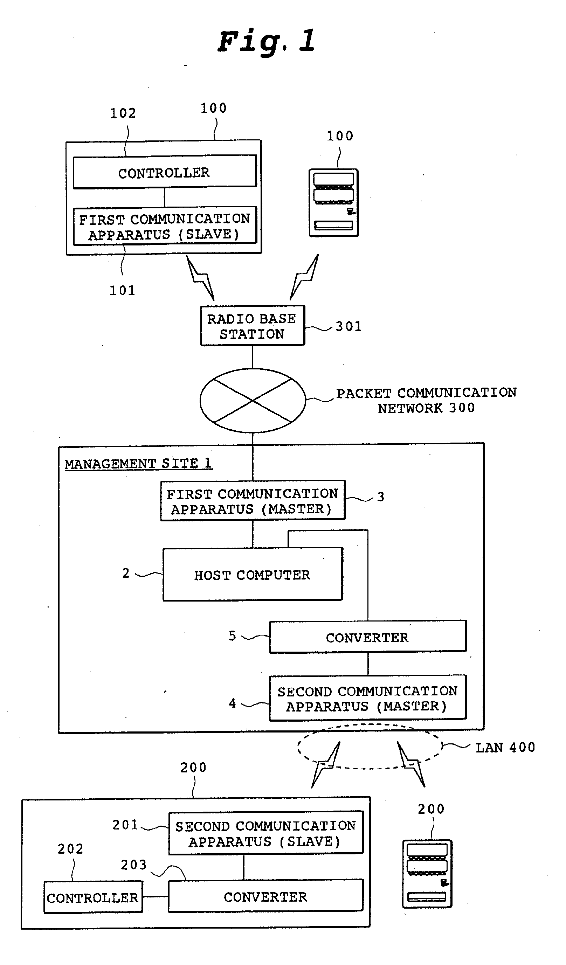

A management system for a vending machine in accordance with an embodiment of the present invention will be described with reference to Fig. 1. Fig. 1 is a diagram of the management system for the vending machine.

As shown in Fig. 1, in the management system in accordance with this embodiment, various kinds of information concerning each vending machine is centrally managed in a host computer 2 installed in a management site 1. Objects of management in this management system are a plurality of vending machines 100 installed in remote places and a plurality of vending machines 200 installed in the vicinity of the management site 1 or in the management site 1. Examples of management of vending machines include the case in which a management company of vending machines manages the vending machines 100 installed in various parts of the country targeting general users and the vending machines 200 installed in the company for its employees or visitors.

In this management system, the host computer 2 and the vending machines 100 are connected via a packet communication network 300. In addition, the host computer 2 and the vending machines 200 are connected via a local area network (hereinafter referred to as "LAN") 400.

In this embodiment, a PHS (Personal Handyphone System) was utilized as the packet communication network 300. Consequently, each vending machine 100 is connected to the packet communication network 300 wirelessly via a radio base station 301. On the other hand, a network utilizing radio was used as the LAN 400. For example, a network utilizing a spectrum spread system in a physical layer thereof was used.

The management site 1 is provided with the host computer 2 in which a management program for vending machines runs, a first communication apparatus 3 connected to the vending machines 100 via the packet communication network 300, and a second communication apparatus 4 connected to the vending machines 200 via the LAN 400. The first communication apparatus 3 is directly connected to the host computer 2. On the other hand, the second communication apparatus 4 is connected to the host computer 2 via a converter 5.

The first communication apparatus 3 is connected to the plurality of vending machines 100 as a so-called "master set". In this embodiment, since the packet communication network 300 is utilized as a network, the first communication apparatus 3 consists of a device connectable to the packet communication network 300. More specifically, since the first communication apparatus 3 was connected to a PHS network via an ISDN (Integrated Services Digital Network), a TA (Terminal Adaptor) was utilized. This first communication apparatus 3 is controlled from the host computer 2 according to a predetermined communication protocol. In this embodiment, an AT command was used as a control command system. That is, a local side communication protocol of the first communication apparatus 3 is the AT command. In addition, RS-232C was used as a communication interface between the first communication apparatus 3 and the host computer 2.

The second communication apparatus 4 is connected to the plurality of vending machines 200 as a so-called "master set" in the same manner as the first communication apparatus 3. In this embodiment, since the LAN 400 is utilized as a network, the second communication apparatus 4 consists of a device connectable to the LAN 400. More specifically, a radio set utilizing a spectrum spread system was used. A communication protocol on a local side, that is, a wired side of this second communication apparatus 4 is a communication protocol different from that of the first communication apparatus 3. In this embodiment, the second communication apparatus 4 is controlled according to a communication protocol called "non-procedural".

The converter 5 is for converting the local side communication protocol of the second communication apparatus 4 into the local side communication protocol of the first communication apparatus 3. Therefore, in this embodiment, the AT command is used between the host computer 2 and the converter 5, and the non-procedural is used between the converter 5 and the second communication apparatus 4. In addition, as a communication interface between the converter 5 and the host computer 2, the RS-232C was used as in the first communication apparatus 3.

The vending machine 100 is provided with a first communication apparatus 101 for connecting to the packet communication network 300 and a controller 102 for controlling various controlled devices of the vending machine 100 and, sending various kinds of information such as sales information and failure information to the host computer 2 via the packet communication network 300. The first communication apparatus 101 corresponds to the first communication apparatus 3 installed in the management site 1 and functions as a so-called slave set of this first communication apparatus 3. In addition, a communication protocol, a communication interface, and the like between this first communication apparatus 101 and the controller 102 are the same as those between the first communication apparatus 3 and the host computer 2 in the management site 1.

The vending machine 200 is provided with a second communication apparatus 201 for connecting to the LAN 400, a controller 202 for controlling various controlled devices of the vending machine 200 and, sending various kinds of information such as sales information and failure information to the host computer 2 via the LAN 400, and a converter 203 connected between the second communication apparatus 201 and the controller 202. The second communication apparatus 201 corresponds to the second communication apparatus 4 installed in the management site 1 and functions as a so-called slave set of this second communication apparatus 4. A local side communication protocol, a communication interface and the like of this second communication apparatus 4 are the same as those of the second communication apparatus 4. In addition, the converter 203 is the same as the converter 5 installed in the management site 1. Moreover, the controller 202 is the same as the controller 102 provided in the vending machine 100.

When compared with the conventional management system, such a management system is identical with the conventional one in that it is provided with the first vending machine 100, the host computer 2 and the first communication apparatus 3 in the management site 1, and the packet communication network 300. In other words, this management system is different from the conventional management system in that it has a configuration in which the second communication apparatus 4 and the converter 5 are added in the management site 1 and the communication apparatus is replaced with the second communication apparatus 201 and the converter 203 is added in the vending machine 200. Consequently, this management system is established extremely easily and at low costs. In particular, from the viewpoint of the management program running in the host computer 2, since the second communication apparatus 4, which uses the communication protocol different from that of the conventional first communication apparatus 3, can be handled in the same manner as the first communication apparatus 3, the management system of the present invention has a significant advantage that it is unnecessary to correct or change a program. Similarly, as to the controller 202 of the vending machine 200, the management system of the present invention has a significant advantage that it is unnecessary to correct or change a program and the same program as that of the conventional vending machine 100 can be utilized.

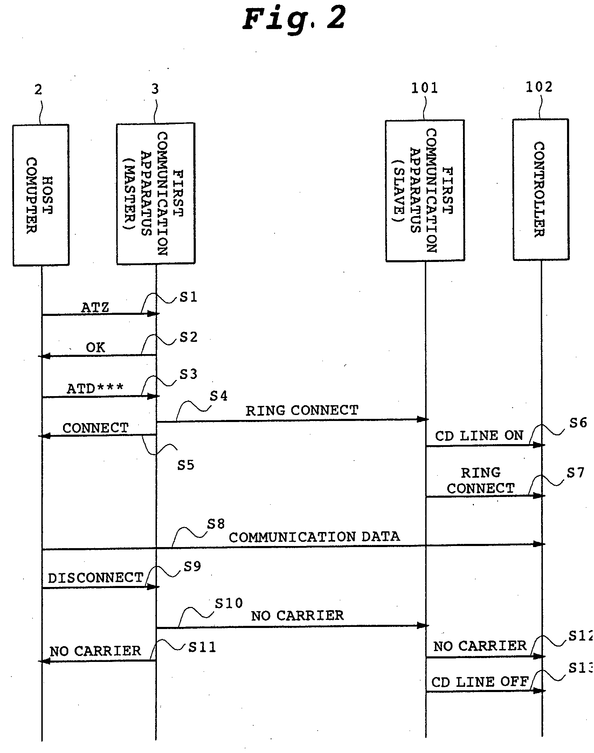

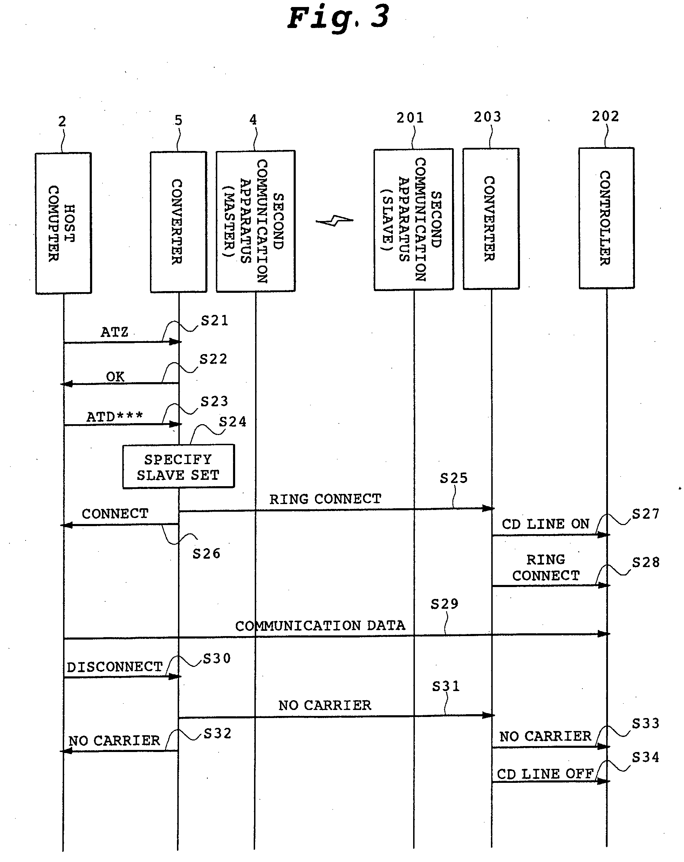

Next, operations in this management system will be described with reference to Figs. 2 and 3. Fig. 2 is a sequence diagram of communication between a host computer and a vending machine via a packet communication network. Fig. 3 is a sequence diagram of communication between a host computer and a vending machine via an LAN. Here, the case in which the host computer is connected to each vending machine to perform communication will be described.

First, communication between the host computer 2 and the vending machine 100 via the packet communication network 300 will be described with reference to Fig. 2.

In the first place, when the host computer 2 sends an initialization instruction ATZ to the first communication apparatus 3 (step S1), the first communication apparatus 3 returns a confirmation signal OK (step S2). Subsequently, when the host computer 2 sends an instruction ATD *** (*** is a telephone number) for dialing up a telephone number of the vending machine 100, to which it is connected, to the first communication apparatus 3 (step S3), the first communication apparatus 3 makes a call to the telephone number (RING CONNECT)(step S4). When connection of the first communication apparatus 3 and the communication apparatus 101 of the vending machine 100 is completed, the first communication apparatus 3 notifies the host computer 2 to the effect that the connection has been completed (CONNECT) (step S5).

On the other hand, upon receiving the call from the first communication apparatus 3, the first communication apparatus 101 of the vending machine 100 turns a CD (Carrier Detect) line of RS-232C ON to notify the controller 102 that it has received an effective signal from a communication line (step S6) and, at the same time, sends the call (RING CONNECT) to the controller 102 (step S7).

Since connection is established between the host computer 2 and the controller 102 of the vending machine 100 by the above-mentioned steps, the host computer 2 sends desired data to the controller 102 (step S8).

When the data communication is completed, the host computer 2 sends a disconnection signal to the first communication apparatus 3 (step S9). Subsequently, the first communication apparatus 3 notifies the opposing first communication apparatus 101 to the effect that no communication is made (NO CARRIER) (step S10) and, at the same time, notifies the host computer 2 to the effect that no communication is made (NO CARRIER) (step S11). The first communication apparatus 101, which has received NO CARRIER from the opposing first communication apparatus 3, sends NO CARRIER to the controller 102 (step S12) and, at the same time, turns the CD line OFF to notify the controller 102 that it has not received an effective signal from the communication line (step S13).

Next, communication between the host computer 2 and the vending machine 200 via the LAN 400 will be described with reference to Fig. 3.

First, when the host computer 2 sends an initialization instruction ATZ to the converter 5 (step S21), the converter 5 returns a confirmation signal OK (step S22). Subsequently, when the host computer 2 sends an instruction ATD *** (*** is a telephone number) for dialing up a telephone number of the vending machine 100, to which it is connected, to the converter 5 (step S23), the converter 5 specifies the second communication apparatus 201 of the vending machine 200 that is a slave set corresponding to this telephone number (step S23). More specifically, the converter 5 specifies an identification number of a terminal in the LAN 400 (step S24). Thereafter, communication can be made freely between the converter 5 of the management site 1 and the converter 203 of the vending machine 200 by using this identification number.

Next, the converter 5 instructs the converter 203 via the second communication apparatus 4 and the second communication apparatus 201 of the vending machine 200 to the effect that the call is to be made (RING CONNECT) (step S25). Here, this call instruction is not a control instruction with respect to the communication between the second communication apparatus 4 and the second communication apparatus 201 but is simply data flowing on the communication. Thereafter, the converter 5 notifies the host computer 2 to the effect that connection has been made (CONNECT) (step S26).

On the other hand, since a communication protocol is non-procedural, the second communication apparatus 201 of the vending machine 200 sends the data received from the converter 5 via the second communication apparatus 4 to the converter 203 without change. Therefore, upon being instructed by the converter 5 of the management site 1 to the effect that the call is to be made, the converter 203 of the vending machine 200 turns a CD (Carrier Detect) line of RS-232C ON to notify the controller 202 that an effective signal has been received from the communication line (step S27) and, at the same time, sends RING CONNECT to the controller 202 (step S28).

Since connection is established between the host computer 2 and the controller 202 of the vending machine 200 by the above-mentioned steps, the host computer 2 sends desired data to the controller 202 (step S29).

When the data communication is completed, the host computer 2 sends a disconnection signal to the converter 5 (step S30). Subsequently, the converter 5 notifies the opposing converter 203 to the effect that no communication is made (NO CARRIER) (step S31) and, at the same time, also notifies the host computer 2 to the effect that no communication is made (NO CARRIER) (step S32). The converter 203, which has received NO CARRIER from the opposing converter 5, sends NO CARRIER to the controller 202 (step S33) and, at the same time, turns the CD line OFF to notify the controller 202 that an effective signal has not been received from the communication line (step S34).

In this way, according to the management system for vending machines in accordance with this embodiment, as it will be clear if Figs. 2 and 3 are compared, a host computer and a controller of a vending machine can perform identical processing even if local side protocols of a communication apparatus are different from each other. Therefore, a system corresponding to a plurality of communication infrastructures can be established easily and at low costs without changing or correcting the host computer 2 at all.

Note that the described embodiment of the present invention is illustrative and is not restrictive. A scope of the present invention is indicated by appended claims, and all modifications falling under the meaning of the claims are included in the present invention.

For example, although a terminal connected to a packet communication network using a PHS is used as a first communication apparatus and a radio communication terminal using spectrum spread is used as a second communication apparatus in this embodiment, devices for network of other formats may be used. That is, a network format between a vending machine and a host computer is no object. Moreover, any communication protocol, interface format, and the like may be used in each communication terminal.

## Claims

1. A management system for a vending machine comprising:
a host computer (2) for centrally managing various kinds of information on the vending machine (100, 200);
a first communication apparatus (3) for connecting said host computer (2) to a first network (300);
a second communication apparatus (4) for connecting said host computer (2) to a second network (400); and
a protocol converter (5) existing between said host computer (2) and said second communication apparatus (4),
wherein said second communication apparatus (4) uses a protocol, which is different from a local side communication protocol of said first communication apparatus (3), in local side communication, and
said protocol converter (5) converts the local side communication protocol used in said first communication apparatus (3) into the local side communication protocol used in said second communication apparatus (4) and vice versa.

2. A management system for a vending machine comprising:
a host computer (2) for centrally managing various kinds of information on the vending machine (100, 200);
a first communication apparatus (3) connecting said host computer (2) to a first network (300) and using a first protocol in communication with said host computer (2);
a protocol converter (5) for communicating with said host computer (2) using the first protocol and converting the first protocol into a second protocol and vice versa; and
a second communication apparatus (4) for connecting said host computer (2) to a second network (400) via said protocol converter (5) and using the second protocol in communication with said protocol converter (5).
